# FASCICULE DE BREVET EUROPEEN

(11) **EP 3 210 746 B1**
(45) Date de publication et mention de la délivrance du brevet: **26.09.2018**
(21) Numéro de dépôt: 17157818.0
(22) Date de dépôt: 24.02.2017
(51) Int. Cl.: B29C 45/40, B29C 33/44

(54) **DISPOSITIF DE SÉPARATION POUR MOULE COMPRENANT UNE CHAÎNE DE MAILLONS ARTICULÉS ENTRE EUX**
VORRICHTUNG ZUM ENTFORMEN MITTELS KETTENARTIGVERBUNDENER ELEMENTE
SEPARATING DEVICE FOR A MOLD COMPRISING A CHAIN OF ARTICULATED LINKS

(30) Priorité: 26.02.2016 FR 1651611
(43) Date de publication de la demande: 30.08.2017
(73) Titulaire: Faurecia Intérieur Industrie, 92000 Nanterre (FR)
(72) Inventeur: BELLIARD, Sylvain, 72700 Rouillon (FR)
(74) Mandataire: Lavoix

(56) Documents cités:
- JP-A- H0 671 703
- JP-A- H06 328 533
- US-A- 3 290 724

## Description

La présente invention concerne un dispositif de séparation du type pour moule de réalisation d'un article moulé dans une cavité de moulage destiné à permettre la séparation entre au moins une partie de l'article moulé et au moins une partie de ladite cavité de moulage, ledit dispositif comprenant :
- un dispositif d'actionnement mobile en translation selon un premier axe entre une position rétractée et une position de séparation,
- au moins un élément de séparation mobile en translation selon un deuxième axe, différent du premier axe, entre une position rétractée et une position de séparation,
- au moins un dispositif de transfert reliant le dispositif d'actionnement et l'élément de séparation, ledit dispositif de transfert étant agencé pour déplacer l'élément de séparation selon le deuxième axe entre sa position rétractée et sa position de séparation lorsque le dispositif d'actionnement est déplacé selon le premier axe entre sa position rétractée et sa position de séparation.

Dans un moule de réalisation d'une pièce moulée, tel qu'un moule d'injection, la pièce moulée est retirée du moule, par exemple au moyen d'un outil de préhension, lorsque la cavité de moulage est ouverte. Afin de faciliter ce retrait, il est prévu de séparer la pièce moulée de la partie du moule sur laquelle la pièce moulée repose au moyen d'un dispositif de séparation ou dispositif d'éjection.

Un tel dispositif d'éjection comprend généralement une plaque d'éjection, mobile dans un espace évidé de la partie du moule selon une direction correspondant à la direction d'éjection de la pièce, et une ou plusieurs tiges d'éjection solidaires de la plaque d'éjection et débouchant dans la paroi de la partie du moule contre laquelle la pièce moulée est appliquée. En déplaçant la plaque d'éjection selon la direction d'éjection, les tiges d'éjection poussent la pièce moulée de sorte à la séparer de la paroi de la partie du moule, ce qui permet le retrait ultérieur de la pièce moulée. L'utilisation de plusieurs tiges est particulièrement intéressante lorsque la pièce moulée présente une surface importante car ces tiges peuvent être réparties sur cette surface afin de pousser la pièce en différentes parties de celle-ci et éviter des déformations et ou des ruptures de la pièce au cours de son éjection. L'utilisation d'une plaque d'éjection permet de déplacer simultanément toutes les tiges au moyen d'un seul dispositif d'actionnement de la plaque d'éjection.

L'état de l'art le plus proche JP H06 328 533 divulgue un dispositif de séparation pour moule. Les documents JP H06 71703 et US 329 0724 sont outre l'état de l'art antérieur.

Cependant, dans un tel dispositif de séparation, les tiges sont mobiles uniquement selon une direction d'éjection unique, ce qui limite les possibilités de courses d'éjection. Une telle limitation peut être problématique pour des pièces présentant des formes complexes, par exemple lorsque ces pièces ne sont pas planes et présentent des zones s'étendant dans un ou plusieurs plans différents d'un plan perpendiculaire à la direction d'éjection ou lorsqu'elles comprennent des éléments s'étendant en saillie selon une direction différente de la direction d'éjection.

D'autre part, la plaque d'éjection doit présenter une taille suffisante pour recevoir l'ensemble des tiges, ce qui nécessite de prévoir un espace évidé de taille correspondante dans la partie du moule. Cependant, plus cet espace est important, plus la partie du moule dans lequel il est pratiqué est fragilisée. Ceci peut être particulièrement problématique dans un moule d'injection, dans lequel la partie du moule doit être apte à résister à la pression d'injection du matériau injecté dans la cavité de moulage. Sans une telle résistance, la cavité de moulage peut être déformée au cours de l'injection et produire ainsi des pièces non conformes à ce qui est souhaité.

En outre, la disposition des tiges dans la partie du moule peut être compliquée par la présence d'éléments additionnels prévus dans le moule. Par exemple, des éléments de chauffage ou des canaux de circulation d'un fluide caloporteur peuvent être prévus dans le moule. Le choix de la disposition des tiges est alors limité pour ne pas interférer avec ces éléments, ce qui peut être problématique pour supporter certaines zones de la pièce au cours de l'éjection.

Un problème se pose également lorsqu'un élément de moulage complémentaire destiné à former un élément complémentaire sur l'article moulé, tel qu'un fût de vissage ou autre, doit être séparé de l'élément complémentaire de l'article moulé avant de pouvoir retirer l'article moulé de la cavité de moulage. Un tel problème se pose notamment lorsque la forme de l'élément complémentaire ne permet pas l'éjection de l'article moulé par simple actionnement d'un dispositif d'éjection.

L'un des buts de l'invention est de pallier les inconvénients ci-dessus en proposant un dispositif de séparation offrant une plus grande liberté d'agencement tout en étant moins encombrant, même pour les pièces à mouler de grandes dimensions ou comprenant un ou plusieurs éléments complémentaires formés par un ou plusieurs éléments de moulage complémentaires.

A cet effet, l'invention concerne un dispositif de séparation du type précité, dans lequel le dispositif de transfert comprend au moins deux maillons, mobiles en rotation l'un par rapport à l'autre et par rapport au dispositif d'actionnement et à l'élément de séparation, et un élément de guidage recevant lesdits maillons, lesdits maillons étant déplacés selon une course de déplacement dans ledit élément de guidage par le dispositif d'actionnement et déplaçant l'élément de séparation, lesdits maillons étant guidés dans ledit élément de guidage sur toute la course de déplacement.

Le dispositif de transfert permet de modifier la direction de séparation de l'élément de séparation en choisissant un deuxième axe incliné par rapport au premier axe. Ainsi, à titre d'exemple, le dispositif de séparation peut comprendre une tige d'éjection éjectant la pièce selon le premier axe et une autre tige d'éjection formant l'élément de séparation et éjectant la pièce selon le deuxième axe, ce qui permet d'éjecter des pièces de forme complexe. Le dispositif de transfert permet également de déporter le deuxième axe par rapport au premier axe, c'est-à-dire de positionner le deuxième axe à distance du premier axe sans nécessiter d'agrandir l'espace nécessaire pour le déplacement du dispositif de séparation selon le premier axe. Ainsi, dans le cas d'une plaque d'éjection formant le dispositif de séparation, la dimension de l'espace évidé dans la partie du moule peut être réduite de sorte que la robustesse de la partie du moule est augmentée et permet à la partie du moule de résister à de hautes pressions d'injection. Le dispositif de transfert peut également être utilisé pour contourner des éléments additionnels prévus dans la partie du moule, ce qui permet de positionner l'élément de séparation comme souhaité quelle que soit la structure de la partie du moule. Le dispositif de séparation peut également être utilisé avantageusement lorsque l'élément de séparation est un élément de moulage complémentaire destiné à former un élément complémentaire sur l'article moulé.

Selon d'autres caractéristiques du dispositif de séparation selon l'invention :
- les maillons sont identiques les uns aux autres ;
- le dispositif de transfert est agencé pour qu'un déplacement du dispositif d'actionnement d'une distance donnée selon le premier axe entraîne un déplacement de l'élément de séparation d'une même distance selon le deuxième axe ;
- l'élément de guidage comprend au moins deux parois opposées s'étendant chacune selon la course de déplacement ;
- les maillons comprennent chacun deux surfaces opposées, lesdites surfaces opposées étant respectivement en contact permanent avec une paroi opposée de l'élément de guidage sur toute la course de déplacement de sorte que les maillons sont guidés dans ledit élément de guidage sur toute la course de déplacement ;
- le premier axe et le deuxième axe sont sensiblement parallèles l'un par rapport à l'autre ou forment un angle non nul entre eux ;
- l'élément de guidage comprend un tronçon amont s'étendant selon un axe sensiblement parallèle au premier axe, un tronçon aval s'étendant selon le deuxième axe et un tronçon intermédiaire s'étendant selon un trajet sensiblement rectiligne et/ou incurvé entre le tronçon amont et le tronçon aval ;
- chaque maillon comprend deux flancs et un ergot d'articulation, l'ergot d'articulation d'un maillon étant reçu entre les deux flancs d'un autre maillon et étant articulé auxdits flancs de sorte à permettre une rotation desdits maillons l'un par rapport à l'autre ;
- le dispositif d'actionnement comprend au moins une plaque d'éjection et une tige d'actionnement solidaire à une de ses extrémités de ladite plaque d'éjection, l'extrémité opposée de ladite tige d'actionnement étant articulée à l'un des maillons du dispositif de transfert ;
- le dispositif de séparation comprend une pluralité de tiges d'actionnement solidaires de la plaque d'éjection, une pluralité d'éléments de séparation et une pluralité de dispositifs de transfert reliant ladite pluralité d'élément de séparation à ladite pluralité de tiges d'actionnement ;
- l'élément de séparation est un élément d'éjection destiné à permettre l'éjection de l'article moulé hors de la cavité de moulage ; et
- l'élément de séparation est un élément de moulage complémentaire définissant une partie de la cavité de moulage dans la position rétractée et destiné à former un élément complémentaire sur l'article moulé, ledit élément de moulage complémentaire étant séparé dudit élément complémentaire de l'article moulé dans la position de séparation de l'élément de séparation.

L'invention concerne également un moule comprenant une première partie de moule et une deuxième partie de moule, comprenant chacune une surface de moulage et mobiles l'une par rapport à l'autre entre une position ouverte, dans laquelle la deuxième partie de moule est écartée de la première partie de moule, et une position fermée, dans laquelle les surfaces de moulage de la première et la deuxième parties de moule définissent entre elles une cavité de moulage présentant la forme de la pièce à mouler, ledit moule comprenant un dispositif de séparation tel que décrit ci-dessus intégré dans la première partie de moule, l'élément de séparation formant une partie de la cavité de moulage en position rétractée et s'étendant en saillie ou en retrait de la surface de moulage de la première partie de moule selon le deuxième axe en position de séparation.

D'autres aspects et avantages de l'invention apparaîtront à la lecture de la description qui suit, donnée à titre d'exemple et faite en référence aux dessins annexés, dans lesquels :
- la Fig. 1 est une représentation schématique en coupe d'une première partie de moule comprenant un dispositif de séparation selon un mode de réalisation de l'invention, ledit dispositif étant en position rétractée,
- la Fig. 2 est une représentation schématique en coupe de la première partie de moule de la Fig. 1, le dispositif de séparation étant en position de séparation,
- la Fig. 3 est une représentation schématique en coupe d'une partie d'un dispositif de séparation selon un autre mode de réalisation,
- la Fig. 4 est une représentation schématique en coupe de la partie du dispositif de séparation de la Fig. 3, dans une position différente,
- la Fig. 5 est une représentation schématique en perspective d'une partie du dispositif de transfert du dispositif de séparation selon l'invention,
- la Fig. 6 est une représentation schématique en coupe d'une première partie de moule comprenant un dispositif de séparation selon un autre mode de réalisation de l'invention, ledit dispositif étant en position rétractée en traits pleins et en position de séparation en pointillés, et
- la Fig. 7 est une représentation schématique en coupe d'une première partie de moule comprenant un dispositif de séparation selon un autre mode de réalisation de l'invention, ledit dispositif étant en position rétractée en traits pleins et en position de séparation en pointillés.

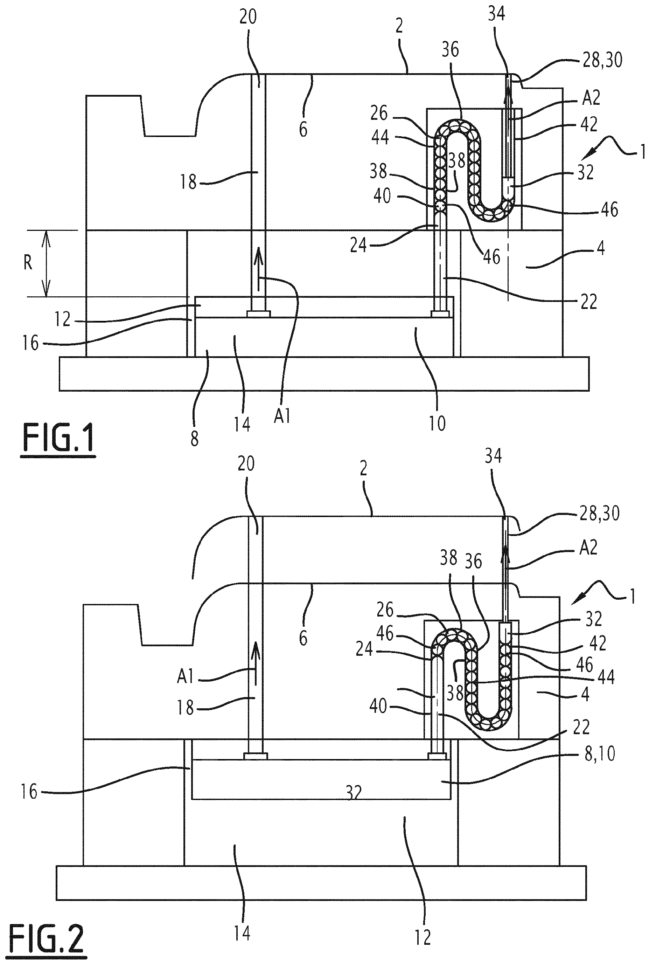

En référence à la Fig. 1, on décrit un moule de réalisation 1 d'un article moulé 2 pouvant présenter toute forme apte à être moulée. L'article moulé 2 est par exemple une pièce de véhicule automobile ou autre.

Le moule de réalisation 1 comprend une première partie 4 et une deuxième partie (non représentée pour simplifier les figures), mobiles l'une par rapport à l'autre entre une position ouverte, dans laquelle les première et deuxième parties sont écartées l'une de l'autre, et une position fermée, dans laquelle les première et deuxième parties sont rapprochées l'une de l'autre de sorte à définir une cavité de moulage fermée. La cavité de moulage présente une forme complémentaire de la forme de l'article moulé 2 à réaliser. Le déplacement de position fermée à la position ouverte se fait selon une direction d'ouverture D, représentée sur les figures. La première partie comprend une surface de moulage 6 définissant, avec une surface de moulage de la deuxième partie, la cavité de moulage lorsque les première et deuxième parties sont en position fermée.

Le moule de réalisation 1 est par exemple un moule d'injection agencé pour injecter une matière plastique à une pression prédéterminée dans la cavité de moulage. A cet effet, le moule de réalisation 1 comprend tous les moyens permettant de réaliser et de contrôler cette injection et la formation de la pièce, tels que une ou plusieurs buses d'injection du matériau plastique, des moyens de régulation de la température de la cavité de moulage, des moyens d'actionnement et de déplacement des première et deuxième parties du moule de réalisation 1, etc. De tels moyens étant connus, ils ne seront pas décrits plus en détail ici.

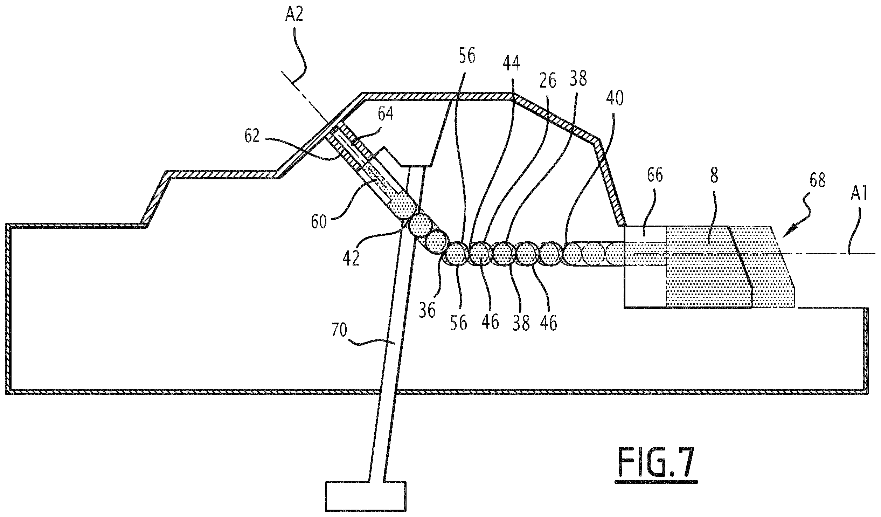

Le moule de réalisation 1 comprend un dispositif de séparation agencé pour faciliter la séparation entre au moins une partie de de l'article moulé 2 et au moins une partie de la cavité de moulage après la réalisation de l'article moulé. Une fois que l'article moulé 2 est réalisé, la première et la deuxième parties du moule sont déplacées dans la position ouverte. L'article moulé 2 se trouve alors contre la surface de moulage 6 de la première partie 4, comme représenté sur la Fig. 1, et le dispositif de séparation est agencé soit pour écarter l'article moulé 2 de la surface de moulage 6, comme représenté sur la Fig. 2, afin de permettre la préhension de l'article moulé 2 pour le sortir du moule de réalisation, soit pour séparer un élément de moulage complémentaire d'un élément complémentaire formé sur l'article moulé, comme représenté sur la Fig. 7.

La description va à présent être faite dans le cadre d'un dispositif de séparation formant un dispositif d'éjection de l'article moulé, un tel dispositif étant agencé pour écarter l'article moulé 2 de la surface de moulage 6 afin de permettre la préhension de l'article moulé 2 pour le sortir du moule de réalisation

Le dispositif de séparation comprend un dispositif d'actionnement 8 mobile dans la première partie 4 selon un premier axe A1 entre une position rétractée, représentée sur la Fig. 1, et une position de séparation, représentée sur la Fig. 2. Le premier axe A1 est par exemple sensiblement parallèle à la direction d'ouverture D de sorte que, en position de séparation, l'article moulé 2 est écarté de la surface de moulage 6 dans l'espace entre la première partie 4 et la deuxième partie du moule.

Le dispositif d'actionnement 8 comprend au moins une plaque d'éjection 10 disposée, de façon mobile en translation selon le premier axe A1, dans un espace 12 de la première partie 4. Dans la position rétractée, la plaque d'éjection 10 est disposée dans une partie amont 14 de l'espace 12, c'est-à-dire la partie de l'espace 12 la plus éloignée de la surface de moulage 6, et dans la position de séparation, ou position d'éjection, la plaque d'éjection 10 est disposée dans une partie aval 16 de l'espace 12, c'est-à-dire la partie de l'espace 12 la plus rapprochée de la surface de moulage 6.

Selon un mode de réalisation, le dispositif d'actionnement 8 comprend en outre au moins une première tige d'éjection 18 agencée pour déplacer l'article moulé 2 selon le premier axe A1. La première tige d'éjection 18 s'étend selon le premier axe A1 d'une extrémité solidaire de la plaque d'éjection 10 à une extrémité libre 20 en traversant la première partie 4 du moule de l'espace 12 à la surface de moulage 6. La première tige d'éjection 18 est donc mobile en translation selon le premier axe A1 avec la plaque d'éjection 10 entre une position rétractée, dans laquelle l'extrémité libre 20 affleure la surface de moulage 6 et forme une partie de cette surface de moulage, comme représenté sur la Fig. 1, et une position de séparation, dans laquelle l'extrémité libre 20 s'étend en saillie de la surface de moulage 6 selon le premier axe A1 de sorte à écarter l'article moulé 2 de la surface de moulage 6, comme représenté sur la Fig. 2. Selon un mode de réalisation et de façon connue, le dispositif d'actionnement 8 peut comprendre plusieurs premières tiges d'éjection 18 réparties sur la plaque d'éjection 10 de sorte à permettre l'éjection de l'article moulé 2 en plusieurs endroits de celui-ci.

La dimension h s'étendant entre la plaque d'éjection 10 en position rétractée et la partie aval 16 de l'espace 12 est sensiblement égale à la distance de laquelle on souhaite séparer l'article moulé 2 de la surface de moulage 6 selon le premier axe A1.

Le dispositif d'actionnement comprend en outre au moins une tige d'actionnement 22 s'étendant selon un axe parallèle au premier axe A1 d'une extrémité solidaire de la plaque d'éjection 10 à une extrémité opposée, dite extrémité d'actionnement 24 reliée à un dispositif de transfert 26 lui-même relié à un élément de séparation. Dans le cas d'un dispositif de séparation formant un dispositif d'éjection, l'élément de séparation est un élément d'éjection 28, comme représenté sur les Fig. 1 à 6.

L'élément d'éjection 28 s'étend selon un deuxième axe A2, différent du premier axe A1. L'élément d'éjection 28 est par exemple formé par une deuxième tige d'éjection 30 comprenant une extrémité d'actionnement 32 reliée au dispositif de transfert 26 et une extrémité libre 34, affleurant la surface de moulage 6 et formant une partie de cette surface de moulage en position rétractée du dispositif d'actionnement 8, comme représenté sur la Fig. 1, et s'étendant en saillie de la surface de moulage 6 selon le deuxième axe A2 de sorte à écarter l'article moulé 2 de la surface de moulage 6 selon ce deuxième axe A2, comme représenté sur la Fig. 2.

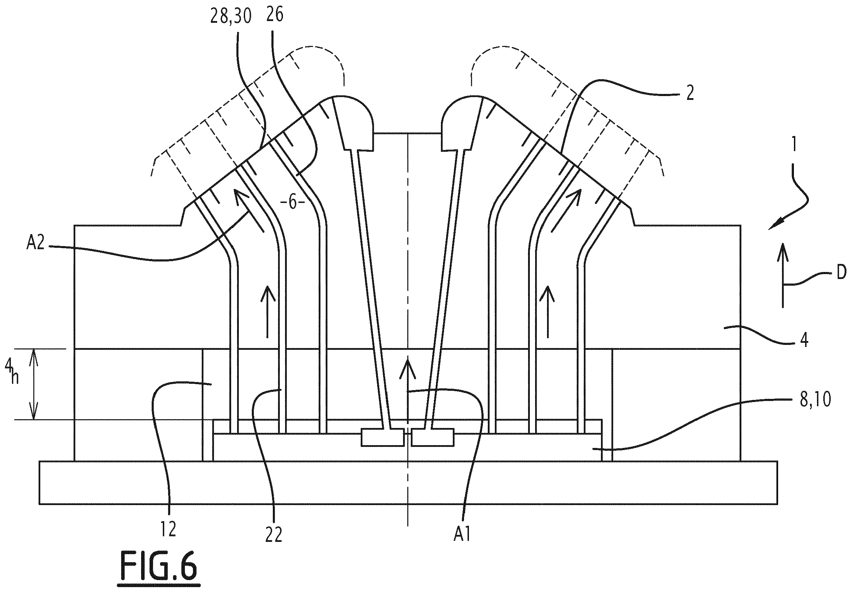

Le deuxième axe A2 peut être sensiblement parallèle au premier axe A1, comme représenté sur les Fig. 1 à 4, ou être incliné par rapport au premier axe, c'est-à-dire former un angle non nul avec le premier axe, comme représenté sur la Fig. 6.

Ainsi, le deuxième élément d'éjection 28 est déplaçable entre une position rétractée et une position de séparation respectivement lorsque le dispositif d'actionnement 8 est en position rétractée et en position de séparation par l'intermédiaire du dispositif de transfert 26 qui est agencé pour transformer le mouvement du dispositif d'actionnement 8 selon le premier axe A1 en mouvement de l'élément d'éjection 28 selon le deuxième axe A2, comme cela va à présent être décrit.

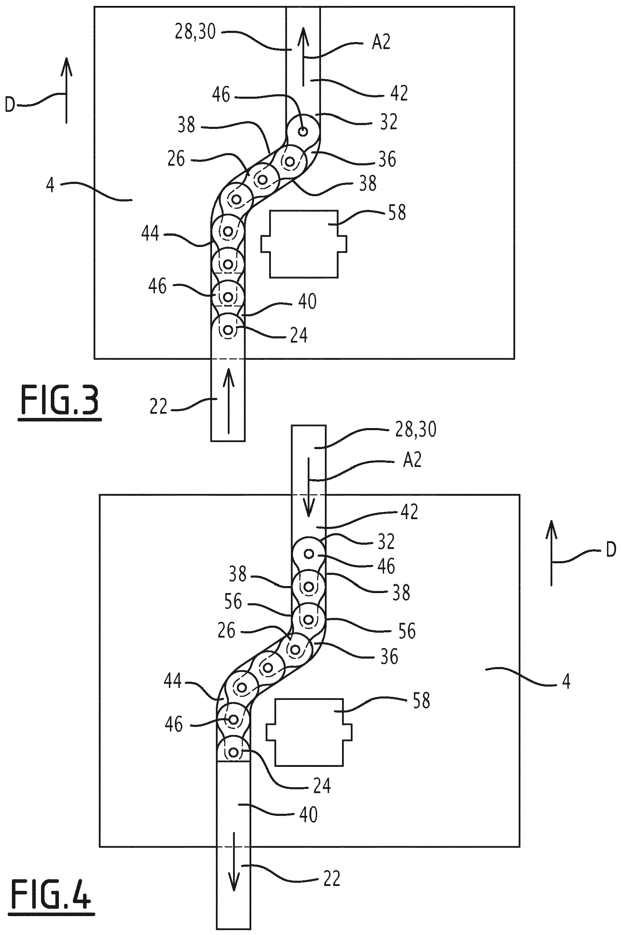

Le dispositif de transfert 26 comprend un élément de guidage 36 s'étendant dans la première partie 4 du moule entre l'espace 12 et la surface de moulage 6 selon un trajet adapté à l'agencement de la première partie 4 comme cela sera décrit ultérieurement. L'élément de guidage 36 est par exemple formé par une gorge ou glissière s'étendant dans la première partie 4 et comprenant deux parois opposées 38 s'étendant chacune selon le trajet suivi par l'élément de guidage 36, comme plus particulièrement visible sur les Fig. 3 et 4. L'élément de guidage 36 comprend un tronçon amont 40 s'étendant au voisinage de l'espace 12 selon un axe sensiblement parallèle au premier axe A1, débouchant dans cet espace 12 et apte à recevoir au moins une partie de la tige d'actionnement 22 au moins dans la position de séparation, comme représenté sur la Fig. 2. L'élément de guidage 36 comprend également un tronçon aval 42 s'étendant au voisinage de la surface de moulage 6 selon le deuxième axe A2, débouchant dans cette surface de moulage 6 et apte à recevoir au moins une partie de la deuxième tige d'éjection 30 au moins dans la position rétractée, comme représenté sur la Fig. 1. L'élément de guidage 36 comprend, entre le tronçon amont 40 et le tronçon aval 42, un tronçon intermédiaire 44 s'étendant selon un trajet rectiligne et/ou incurvé adapté à l'agencement de la première partie 4, comme cela sera décrit ultérieurement.

Le dispositif de transfert comprend en outre au moins deux maillons 46 articulés entre eux et dont l'un est articulé au dispositif d'actionnement 8 et dont l'autre est articulé à l'élément d'éjection 28. Les maillons 46 sont ainsi mobiles en rotation l'un par rapport à l'autre et par rapport au dispositif d'actionnement 8 et à l'élément d'éjection 28. Les axes de rotation sont sensiblement parallèles les uns par rapport aux autres et sensiblement perpendiculaires à un plan contenant le premier axe A1 et le deuxième axe A2.

Le nombre de maillons 46 du dispositif de transfert 26 dépend du trajet suivi par l'élément de guidage 36 et est agencé pour que les maillons relient le dispositif d'actionnement 8 à l'élément de guidage 28. Plus particulièrement, les maillons 46 relient l'extrémité d'actionnement 24 de la tige d'actionnement 22 à l'extrémité d'actionnement 32 de la deuxième tige d'éjection 30. Ainsi, le dispositif de transfert 26 peut comprendre plus de deux maillons 46, dont deux maillons d'extrémités articulés respectivement à l'extrémité d'actionnement 24 de la tige d'actionnement 22 et à l'extrémité d'actionnement 32 de la deuxième tige d'éjection 30 et au moins un maillon intermédiaire articulé aux deux maillons d'extrémité ou plusieurs maillons intermédiaires articulés successivement les uns aux autres de sorte à former une chaîne de maillons 46 s'étendant dans l'élément de guidage 36 entre l'extrémité d'actionnement 24 de la tige d'actionnement 22 et l'extrémité d'actionnement 32 de la deuxième tige d'éjection 30.

Tous les maillons 46 sont identiques, c'est-à-dire qu'ils présentent une forme et une structure identiques, qu'ils soient des maillons d'extrémité ou des maillons intermédiaires.

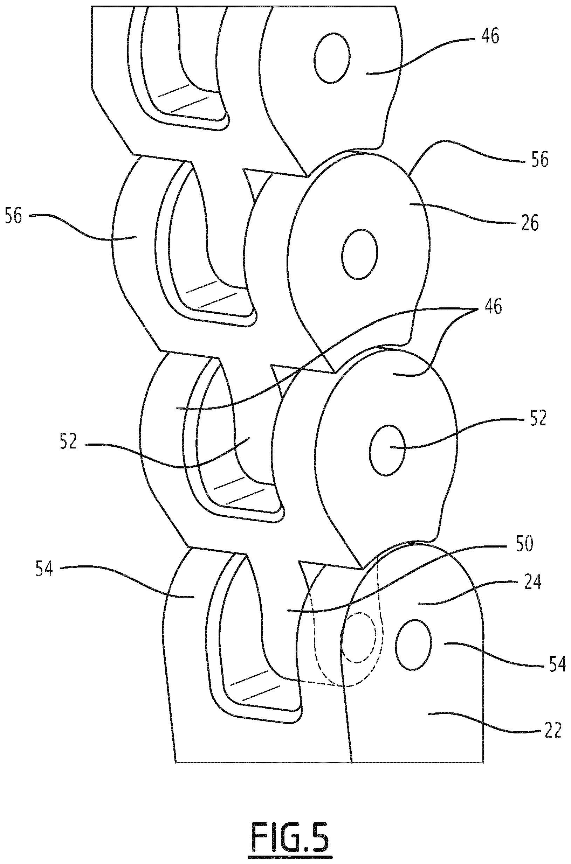

Comme représenté sur la Fig. 5, chaque maillon 46 comprend deux flancs 48 et un ergot d'articulation 50, l'ergot d'articulation 50 d'un maillon 46 étant agencé pour être reçu entre les deux flancs d'un autre maillon 46 adjacent de façon articulée autour d'un axe de rotation tel que décrit précédemment. L'axe de rotation et la fixation entre les maillions sont par exemple formés par un pion (non représenté) introduit dans des orifices 52 en regard traversant les flancs 48 et l'ergot d'articulation 50.

L'ergot d'articulation 50 du maillon d'extrémité articulé à l'extrémité d'actionnement 24 de la tige d'actionnement 22 est introduit entre deux flancs 54 prévus à cette extrémité d'actionnement et articulé avec ces flancs comme décrit ci-dessus. Les deux flancs 48 du maillon d'extrémité articulé à l'extrémité d'actionnement 32 de la deuxième tige d'éjection 30 reçoivent entre eux un ergot d'articulation prévu à l'extrémité d'actionnement de la deuxième tige d'éjection 30, cet ergot d'articulation étant articulé aux deux flancs 48 comme décrit ci-dessus.

Les maillons 46 définissent au moins deux surfaces opposées 56, par exemple définies par des surfaces opposées des flancs 48 s'étendant de part et d'autre de l'axe de rotation, dimensionnées pour être en contact coulissant contre les parois opposées 38 de l'élément de guidage 36, comme plus particulièrement visible sur les Fig. 3 et 4. Les flancs présentent par exemple une section sensiblement circulaire selon un plan perpendiculaire à l'axe de rotation de sorte que des parties diamétralement opposées des flancs forment les surfaces opposées 56. Une telle forme permet d'assurer le contact avec les parois opposées 38 de l'élément de guidage 36 lorsque le diamètre des flancs 48 est sensiblement égal à la distance séparant les parois opposées 38. Entre outre, la surface de contact entre les surfaces opposées 56 et les parois opposées 38 est réduite, ce qui permet d'assurer un glissement entre les surfaces opposées 56 et les parois opposées 38 sans risque de blocage des maillons dans l'élément de guidage 36. Selon le mode de réalisation représenté sur la Fig. 5, chaque maillon 46 comprend quatre surfaces de glissement contre l'élément de guidage.

La forme des maillons 46 décrite ci-dessus est donnée à titre d'exemple et pourrait être différente tant qu'elle permet l'articulation des maillons 46 entre eux et que des surfaces opposées permettent un contact coulissant entre les maillons 46 et les parois opposées 38 de l'élément de guidage 36. Ainsi, à titre d'exemple, chaque maillon pourrait ne comprendre qu'un seul flanc au lieu de deux.

Ainsi, les maillons 46 sont guidés le long de tous leurs déplacements dans l'élément de guidage 36. C'est-à-dire que les surfaces opposées 56 des maillons 46 en contact avec les parois opposées 38 de l'élément de guidage 36 permettent de garantir un guidage permanent de la chaîne de maillons 46 dans l'élément de guidage sur toute la course de déplacement des maillons 46. C'est-à-dire que les surfaces opposées 56 sont sensiblement en contact permanent contre les parois opposées 38 de l'élément de guidage 36 sur toute la course de déplacement des maillons 36. On évite ainsi tout risque de blocage ou d'enrayage du dispositif d'éjection par blocage d'un maillon 36 dans l'élément de guidage 36.

Le glissement entre les maillons 36 et les parois opposées 38 peut être favorisé par les matériaux utilisées pour réaliser les surfaces opposées 56 et/ou les parois opposées 38 ou par un revêtement de ces surfaces et/ou parois ou par l'utilisation d'un lubrifiant.

Grâce au système de transfert 26, le dispositif de séparation permet ainsi de déplacer, en actionnement la plaque d'éjection 10 selon la direction du premier axe A1, l'élément d'éjection 28 selon le deuxième axe A2 de sorte à faire saillir la deuxième tige d'éjection 30 de la surface de moulage 6 dans la direction de l'axe A2. Le dispositif de transfert 26 est agencé de telle sorte que la distance parcourue par la deuxième tige d'éjection 30 selon le deuxième axe A2 est sensiblement égale à la distance parcourue par la plaque d'éjection 10 lorsqu'elle est déplacée selon le premier axe A1. Ainsi, lorsque la plaque d'éjection 10 est déplacée de la distance h permettant de passer de la position rétractée à la position de séparation, la deuxième tige d'éjection 30 se déplace également d'une distance h. Par conséquent, dans le cas où le dispositif d'actionnement comprend une première tige d'éjection 18, on s'assure que la distance de séparation parcourue par la première tige d'éjection 18 et la deuxième tige d'éjection 30 est la même.

Selon le mode de réalisation représenté sur les Fig. 1 et 2, le deuxième axe A2 est parallèle au premier axe A1 et le dispositif de transfert 26 est utilisé pour déporter la position de l'élément d'éjection 28 par rapport à la plaque d'éjection 10. Un tel mode de réalisation est particulièrement avantageux pour l'éjection d'un article moulé 2 de grande dimension sans pour autant nécessiter l'agrandissement de la plaque d'éjection et donc celui de l'espace 12. Par conséquent, la première partie 4 du moule est plus robuste car l'espace 12 ne l'affaiblit pas et elle est apte à résister à des pressions d'injection importantes. Selon ce mode de réalisation, la forme du tronçon intermédiaire 44 comprend une partie incurvée le reliant au tronçon amont 40 et une partie incurvée le reliant au tronçon aval 42 et une partie rectiligne entre les deux parties incurvées, ce qui permet d'augmenter la distance séparant la plaque 10 de l'élément d'éjection 28 sans augmenter l'encombrement de la première partie 4 du moule.

Selon le mode de réalisation représenté sur les Fig. 3 et 4, le deuxième axe A2 est également parallèle au premier axe A1 et le dispositif de transfert 26 est utilisé pour contourner un élément additionnel 58 du moule, tel qu'un canal de transport d'un liquide caloporteur ou autre. Dans ce cas, la forme et la dimension du tronçon intermédiaire 44 sont agencées pour permettre ce contournement. Selon le mode de réalisation représenté sur les Fig. 3 et 4, le tronçon intermédiaire est sensiblement rectiligne et incliné entre le tronçon amont 40 et le tronçon aval 42.

Selon le mode de réalisation représenté sur la Fig. 6, le dispositif d'éjection comprend plusieurs éléments d'éjection 28 et plusieurs dispositifs de transfert 26 reliés à plusieurs tiges d'actionnement 22 solidaires de la plaque d'éjection. Les deuxièmes axes A2 sont inclinés par rapport au premier axe A1. Un tel mode de réalisation permet d'éjecter un ou plusieurs articles moulés 2 de formes complexes tout en utilisant une seule plaque d'éjection 10.

Il est entendu que les modes de réalisation décrits ci-dessus peuvent être combinés les uns avec les autres. Ainsi, la forme de l'élément de guidage 36 dépend de la structure du moule et de la forme de l'article moulé 2 à réaliser et peut être agencée en fonction de ces paramètres.

Le dispositif de séparation décrit ci-dessus permet donc l'éjection d'articles moulés de grandes dimensions et/ou de forme complexe sans affaiblir la première partie du moule. En outre, le dispositif de transfert peut être utilisé pour adapter le dispositif de séparation à la structure de la première partie du moule. La chaîne de maillons peut être facilement modifiée en ajoutant ou supprimant des maillons 36, qui sont tous identiques et interchangeables.

La description va à présent être faite dans le cadre d'un dispositif de séparation permettant de séparer un élément de moulage complémentaire d'une partie de l'article moulé, comme représenté sur la Fig. 7.

Dans ce cas, l'élément de séparation est formé par l'élément de moulage complémentaire 60 mobile selon un deuxième axe A2. Le reste du dispositif de séparation est sensiblement le même que celui décrit dans le cadre d'un dispositif d'éjection, c'est-à-dire qu'il comprend un dispositif d'actionnement 8, mobile selon un premier axe A1, différent du deuxième axe A2, et relié à l'élément de moulage complémentaire 60 par un dispositif de transfert 26, comprenant une pluralité de maillons 46 identiques et mobiles dans un élément de guidage 36. Par conséquent, les éléments similaires entre ces dispositifs de séparation ne vont pas être décrits à nouveau.

L'élément de moulage complémentaire 60 est agencé pour former, dans sa position rétractée et avec la surface de moulage 6 de la première partie 4, une cavité de moulage complémentaire en communication fluidique avec la cavité de moulage définie entre les première et deuxième parties de moule. La cavité de moulage complémentaire présente la forme d'un élément complémentaire 62 formé sur l'article moulé 2 au cours de la réalisation de cet article moulé 2. L'élément complémentaire 62 est par exemple un fût de vissage prévu sur l'envers de l'article moulé 2. Dans ce cas, l'élément de moulage complémentaire comprend par exemple un ergot 64 disposé en position rétractée au centre d'un cylindre formé par la surface de moulage 6 de sorte que la forme de l'élément complémentaire 62 est définie entre la surface externe de l'ergot 64 et la paroi interne du cylindre de la surface de moulage 6. Dans ce cas également, le deuxième axe A2 est parallèle à l'axe du cylindre formé par la surface de moulage 6 et à l'axe de l'ergot 64. Selon un exemple, le deuxième axe A2 est confondu avec l'axe du cylindre et avec l'axe de l'ergot 64.

Lorsque le dispositif de séparation est déplacé en position de séparation, l'élément de moulage complémentaire 60 est séparé de l'élément complémentaire 62. Ainsi, dans le cas d'un fût de vissage, l'ergot 64 est extrait de l'élément complémentaire 62 en positionnant l'ergot 64 dans le tronçon aval 42 de l'élément de guidage 36.

Le dispositif d'actionnement 8 comprend un élément d'actionnement 66 mobile dans un espace 68 dans lequel débouche le tronçon amont 40 de l'élément de guidage 36. Il convient de noter que, selon ce mode de réalisation, le premier axe A1 selon lequel se déplace l'élément d'actionnement 66 peut être différent de la direction d'éjection de l'article moulé. Ainsi, l'espace 68 et l'élément d'actionnement 66 peuvent être disposés dans une partie de la première partie 4 qui peut être favorable en termes d'encombrement et/ou d'agencement des moyens d'actionnement de l'élément d'actionnement 66. Selon le mode de réalisation représenté sur la Fig. 7, l'espace 68 est ainsi prévu sur un côté de la première partie 4 et le premier axe A1 est sensiblement perpendiculaire à la direction d'ouverture du moule.

Le dispositif de séparation peut être utilisé pour contourner un élément additionnel du moule et/ou pour permettre un déplacement de l'élément de moulage complémentaire 60 selon une direction différente du premier axe A1. Ainsi, selon le mode de réalisation représenté sur la Fig. 7, le deuxième axe A2 est incliné par rapport au premier axe A1.

De même que pour un dispositif d'éjection, le dispositif d'actionnement 8 peut être utilisé pour déplacer plusieurs éléments de moulage complémentaires selon plusieurs deuxièmes axes A2 différents.

Le moule comprenant un dispositif de séparation tel que décrit ci-dessus peut également comprendre un dispositif d'éjection 70 classique ou tel que décrit précédemment.

Le fonctionnement du dispositif de séparation selon le mode de réalisation décrit ci-dessus va à présent être décrit.

Pour réaliser l'article moulé 2, les première et deuxième parties de moule sont placées dans la position fermée et le dispositif de séparation est placé en position rétractée. Ainsi, la cavité de moulage et la cavité de moulage complémentaire sont formées et l'article 2 peut être réalisé avec son élément complémentaire 62.

Une fois que l'article 2 a été réalisé, les première et deuxième parties de moule sont déplacées vers la position ouverte et le dispositif de séparation est déplacé la position de séparation par déplacement du dispositif d'actionnement 8 selon le premier axe A1. Ce déplacement entraîne un déplacement de l'élément de moulage complémentaire 62 selon le deuxième axe A2 vers sa position de séparation dans laquelle l'élément de moulage complémentaire 62 est séparé de l'élément complémentaire 64. Le dispositif d'éjection 70 peut alors être utilisé pour séparer l'article moulé 2 de la surface de moulage 6 sans risquer d'endommager l'élément complémentaire 64.

## Revendications

1. Dispositif de séparation pour moule de réalisation d'un article moulé (2) dans une cavité de moulage destiné à permettre la séparation entre au moins une partie de l'article moulé (2) et au moins une partie de ladite cavité de moulage, ledit dispositif comprenant :
- un dispositif d'actionnement (8) mobile en translation selon un premier axe (A1) entre une position rétractée et une position de séparation,
- au moins un élément de séparation (28, 60) mobile en translation selon un deuxième axe (A2), différent du premier axe (A1), entre une position rétractée et une position de séparation,
- au moins un dispositif de transfert (26) reliant le dispositif d'actionnement (8) et l'élément de séparation (28, 60), ledit dispositif de transfert (26) étant agencé pour déplacer l'élément de séparation (28, 60) selon le deuxième axe (A2) entre sa position rétractée et sa position de séparation lorsque le dispositif d'actionnement (8) est déplacé selon le premier axe (A1) entre sa position rétractée et sa position de séparation,
**caractérisé en ce que** le dispositif de transfert (26) comprend au moins deux maillons (46), mobiles en rotation l'un par rapport à l'autre et par rapport au dispositif d'actionnement (8) et à l'élément de séparation (28, 60), et un élément de guidage (36) recevant lesdits maillons (46), lesdits maillons étant déplacés selon une course de déplacement dans ledit élément de guidage (36) par le dispositif d'actionnement (8) et déplaçant l'élément de séparation (28, 60), lesdits maillons (46) étant guidés dans ledit élément de guidage (36) sur toute la course de déplacement.

2. Dispositif de séparation selon la revendication 1, dans lequel les maillons (46) sont identiques les uns aux autres.

3. Dispositif de séparation selon la revendication 1 ou 2, dans lequel le dispositif de transfert (26) est agencé pour qu'un déplacement du dispositif d'actionnement (8) d'une distance donnée selon le premier axe (A1) entraîne un déplacement de l'élément de séparation (28, 60) d'une même distance selon le deuxième axe (A2).

4. Dispositif de séparation selon l'une quelconque des revendications 1 à 3, dans lequel l'élément de guidage (36) comprend au moins deux parois opposées (38) s'étendant chacune selon la course de déplacement.

5. Dispositif de séparation selon la revendication 4, dans lequel les maillons (46) comprennent chacun deux surfaces opposées (56), lesdites surfaces opposées (56) étant respectivement en contact permanent avec une paroi opposée (38) de l'élément de guidage (36) sur toute la course de déplacement de sorte que les maillons (46) sont guidés dans ledit élément de guidage (36) sur toute la course de déplacement.

6. Dispositif de séparation selon l'une quelconque des revendications 1 à 5, dans lequel le premier axe (A1) et le deuxième axe (A2) sont sensiblement parallèles l'un par rapport à l'autre ou forment un angle non nul entre eux.

7. Dispositif de séparation selon l'une quelconque des revendications 1 à 6, dans lequel l'élément de guidage (36) comprend un tronçon amont (40) s'étendant selon un axe sensiblement parallèle au premier axe (A1), un tronçon aval (42) s'étendant selon le deuxième axe (A2) et un tronçon intermédiaire (44) s'étendant selon un trajet sensiblement rectiligne et/ou incurvé entre le tronçon amont (40) et le tronçon aval (42).

8. Dispositif de séparation selon l'une quelconque des revendications 1 à 7, dans lequel chaque maillon (46) comprend deux flancs (48) et un ergot d'articulation (50), l'ergot d'articulation (50) d'un maillon (46) étant reçu entre les deux flancs (48) d'un autre maillon (46) et étant articulé auxdits flancs (48) de sorte à permettre une rotation desdits maillons (46) l'un par rapport à l'autre.

9. Dispositif de séparation selon l'une quelconque des revendications 1 à 8, dans lequel le dispositif d'actionnement (8) comprend au moins une plaque d'éjection (10) et une tige d'actionnement (22) solidaire à une de ses extrémités de ladite plaque d'éjection (10), l'extrémité opposée (24) de ladite tige d'actionnement (22) étant articulée à l'un des maillons (46) du dispositif de transfert (26).

10. Dispositif de séparation selon la revendication 9, comprenant une pluralité de tiges d'actionnement (22) solidaires de la plaque d'éjection (10), une pluralité d'éléments de séparation (28, 60) et une pluralité de dispositifs de transfert (26) reliant ladite pluralité d'élément de séparation (28, 60) à ladite pluralité de tiges d'actionnement.

11. Dispositif de séparation selon l'une quelconque des revendications 1 à 10, dans lequel l'élément de séparation est un élément d'éjection (28) destiné à permettre l'éjection de l'article moulé (2) hors de la cavité de moulage.

12. Dispositif de séparation selon l'une quelconque des revendications 1 à 10, dans lequel l'élément de séparation est un élément de moulage complémentaire (60) définissant une partie de la cavité de moulage dans la position rétractée et destiné à former un élément complémentaire sur l'article moulé (2), ledit élément de moulage complémentaire étant séparé dudit élément complémentaire de l'article moulé (2) dans la position de séparation de l'élément de séparation.

## Patentansprüche

1. Trenn-Vorrichtung für eine Gießform zur Erstellung eines Gussprodukts (2) in einer Gießformkavität, dazu bestimmt, um die Trennung zwischen wenigstens einem Teil des Gussprodukts (2) und wenigstens einem Teil der Gießformkavität zu erlauben, wobei die Vorrichtung aufweist:
- eine Betätigungsvorrichtung (8), die entlang einer ersten Achse (A1) translatorisch bewegbar ist zwischen einer Einfahr-Position und einer Trennungs-Position,
- wenigstens ein Trennungselement (28, 60), das entlang einer zweiten Achse (A2), die von der ersten Achse (A1) verschieden ist, bewegbar ist zwischen einer Einfahr-Position und einer Trennungs-Position,
- wenigstens eine Übertragungsvorrichtung (26), die die Betätigungsvorrichtung (8) und das Trennungselement (28, 60) verbindet, wobei die Übertragungsvorrichtung (26) eingerichtet ist zum Verlagern des Trennungselements (28, 60) entlang der zweiten Achse (A2) zwischen dessen Einfahr-Position und dessen Trennungs-Position, wenn die Betätigungsvorrichtung (8) entlang der ersten Achse (A1) zwischen deren Einfahr-Position und deren Trennungs-Position verlagert wird,
**dadurch gekennzeichnet, dass** die Übertragungsvorrichtung (26) aufweist wenigstens zwei Glieder (46), die bezüglich einander und bezüglich der Betätigungsvorrichtung (8) und dem Trennungselement (28, 60) rotationsbewegbar sind, und ein Führungselement (36), das die Glieder (46) aufnimmt, wobei die Glieder entlang eines Verlagerungswegs in dem Führungselement (36) verlagert werden mittels der Betätigungsvorrichtung (8) und das Trennungselement (28, 60) verlagern, wobei die Glieder (46) über den ganzen Verlagerungsweg in dem Führungselement (36) geführt sind.

2. Trenn-Vorrichtung gemäß Anspruch 1, wobei die Glieder (46) zueinander identisch sind.

3. Trenn-Vorrichtung gemäß Anspruch 1 oder 2, wobei die Übertragungsvorrichtung (26) eingerichtet ist, damit eine Verlagerung der Betätigungsvorrichtung (8) um eine gegebene Distanz entlang der ersten Achse (A1) eine Verlagerung des Trennungselements (28, 60) um eine gleiche Distanz entlang der Achse (A2) bewirkt.

4. Trenn-Vorrichtung gemäß irgendeinem der Ansprüche 1 bis 3, wobei das Führungselement (36) aufweist wenigstens zwei gegenüberliegende Wände (38), die sich jeweils entlang des Verlagerungswegs erstrecken.

5. Trenn-Vorrichtung gemäß Anspruch 4, wobei die Glieder (46) jeweils zwei gegenüberliegende Flächen (56) aufweisen, wobei die gegenüberliegenden Flächen (56) über den ganzen Verlagerungsweg jeweils in permanentem Kontakt mit einer gegenüberliegenden Wand (38) des Führungselements (36) sind, sodass die Glieder (46) über den ganzen Verlagerungsweg in dem Führungselement (36) geführt sind.

6. Trenn-Vorrichtung gemäß irgendeinem der Ansprüche 1 bis 5, wobei die erste Achse (A1) und die zweite Achse (A2) im Wesentlichen parallel zueinander sind oder einen Winkel ungleich null zwischen einander bilden.

7. Trenn-Vorrichtung gemäß irgendeinem der Ansprüche 1 bis 6, wobei das Führungselement (36) aufweist einen vorderen Abschnitt (40), der sich entlang einer Achse erstreckt, die im Wesentlichen parallel zu der ersten Achse (A1) ist, einen hinteren Abschnitt (42), der sich entlang der zweiten Achse (A2) erstreckt, und einen Zwischenabschnitt (44), der sich entlang einer Bahn erstreckt, die im Wesentlichen geradlinig ist und/oder gekrümmt ist, zwischen dem vorderen Abschnitt (40) und dem hinteren Abschnitt (42).

8. Trenn-Vorrichtung gemäß irgendeinem der Ansprüche 1 bis 7, wobei jedes Glied (46) zwei Flankenstücke (48) und ein Klauen-Gelenkstück (50) aufweist, wobei das Klauen-Gelenkstück (50) eines Glieds (46) zwischen den Flankenstücken (48) eines anderen Glieds (46) aufgenommen ist und an den Flankenstücken (48) gelenkig angebracht ist, um eine Drehung der Glieder (46) bezüglich einander zu erlauben.

9. Trenn-Vorrichtung gemäß irgendeinem der Ansprüche 1 bis 8, wobei die Betätigungsvorrichtung (8) aufweist wenigstens eine Ausstoßplatte (10) und eine Betätigungsstange (22), die mit einem ihrer Enden fest mit der Ausstoßplatte (10) verbunden ist, wobei das gegenüberliegende Ende (24) der Betätigungsstange (22) gelenkig an einem der Glieder (46) der Übertragungsvorrichtung (26) angebracht ist.

10. Trenn-Vorrichtung gemäß Anspruch 9, aufweisend eine Mehrzahl von Betätigungsstangen (22), die mit der Ausstoßplatte (10) fest verbunden sind, eine Mehrzahl von Trennungselementen (28, 60) und eine Mehrzahl von Übertragungselementen (26), die die Mehrzahl von Trennungselementen (28, 60) mit der Mehrzahl von Betätigungsstangen verbindet.

11. Trenn-Vorrichtung gemäß irgendeinem der Ansprüche 1 bis 10, wobei das Trennungselement ein Ausstoßelement (28) ist, das dazu bestimmt ist, um das Ausstoßen des Gussprodukts (2) aus der Gießformkavität zu ermöglichen.

12. Trenn-Vorrichtung gemäß irgendeinem der Ansprüche 1 bis 10, wobei das Trennungselement eine komplementäres Gießformelement (60) ist, das in der Einfahr-Position einen Abschnitt der Gießformkavität definiert und dazu bestimmt ist, an dem Gussprodukt (2) ein komplementäres Element auszubilden, wobei das komplementäre Gießformelement in der Trennungs-Position des Trennungselements von dem komplementären Element des Gießprodukts (2) getrennt ist.

## Claims

1. A separating device for a mold used to produce a molded article (2) in a molding cavity intended to allow the separation between at least one part of the molded article (2) and at least one part of said molding cavity, said device comprising:
- an actuating device (8) translatable along a first axis (A1) between a retracted position and a separated position,
- at least one separating element (28, 60) translatable along a second axis (A2), different from the first axis (A1), between a retracted position and a separated position,
- at least one transfer device (26) connecting the actuating device (8) and the separating element (28, 60), said transfer device (26) being arranged to move the separating element (28, 60) along the second axis (A2) between its retracted position and its separated position when the actuating device (8) is moved along the first axis (A1) between its retracted position and its separated position,
**characterized in that** the transfer device (26) comprises at least two links (46), rotatable relative to one another and relative to the actuating device (8) and the separating element (28, 60), and a guide element (36) receiving said links (46), said links being moved along a movement path in said guide element (36) by the actuating device (8) and moving the separating element (28, 60), said links (46) being guided in said guide element (36) over the entire movement path.

2. The separating device according to claim 1, wherein the links (46) are identical to one another.

3. The separating device according to claim 1, wherein the transfer device (26) is arranged so that a movement of the actuating device (8) by a given distance along the first axis (A1) causes a movement of the separating element (28, 60) by a same distance along the second axis (A2).

4. The separating device according to claim 1, wherein the guide element (36) comprises at least two opposite walls (38) each extending over the movement path.

5. The separating device according to claim 4, wherein the links (46) comprise two opposite surfaces (56), said opposite surfaces (56) respectively being in permanent contact with an opposite wall (38) of the guide element (36) over the entire movement path such that the links (46) are guided in said guide elements (36) over the entire movement path.

6. The separating device according to claim 1, wherein the first axis (A1) and the second axis (A2) are substantially parallel to one another or form a non-zero angle relative to one another.

7. The separating device according to claim 1, wherein the guide element (36) comprises an upstream segment (40) extending along an axis substantially parallel to the first axis (A1), a downstream segment (42) extending along the second axis (A2) and an intermediate segment (44) extending along a substantially rectilinear and/or curved path between the upstream segment (40) and the downstream segment (42).

8. The separating device according to claim 1, wherein each link (46) comprises two flanks (48) and a hinge pin (50), the hinge pin (50) of one link (46) being received between the two flanks (48) of another link (46) and being articulated to said flanks (48) so as to allow said links (46) to rotate relative to one another.

9. The separating device according to claim 1, wherein the actuating device (8) comprises at least one ejection plate (10) and an actuating rod (22) secured at one of its ends to said ejection plate (10), the opposite end (24) of said actuating rod (22) being articulated to one of the links (46) of the transfer device (26).

10. The separating device according to claim 9, comprising a plurality of actuating rods (22) secured to the ejection plate (10), a plurality of separating elements (28, 60) and a plurality of transfer devices (26) connecting said plurality of separating elements (28, 60) to said plurality of actuating rods.

11. The separating device according to claim 1, wherein the separating element is an ejection element (28) intended to allow the molded article (2) to be ejected outside the molding cavity.

12. The separating device according to claim 1, wherein the separating element is a complementary molding element (60) defining part of the molding cavity in the retracted position and intended to form a complementary element on the molded article (2), said complementary molding element being separated from said complementary element of the molded article (2) in the separated position of the separating element.
